# FASCICULE DE BREVET EUROPEEN

(11) **EP 1 202 426 B1**
(45) Date de publication et mention de la délivrance du brevet: **16.01.2008**
(21) Numéro de dépôt: 01402657.9
(22) Date de dépôt: 15.10.2001
(51) Int. Cl.: H02J 7/00

(54) **Chargeur de batterie universel et procédé**
Universelles Batterieladegerät und Verfahren
Universal battery charger and method

(30) Priorité: 23.10.2000 FR 0013512
(43) Date de publication de la demande: 02.05.2002
(73) Titulaire: Saft Finance S.à.r.l., 1471 Luxembourg (LU)
(72) Inventeur: Perelle, Michel, 37210 Parcay-Meslay (FR)
(74) Mandataire: Pochart, François

(56) Documents cités:
- US-A- 5 645 949
- US-A- 5 677 613
- US-A- 5 773 957

## Description

L'invention a pour objet un procédé, un agencement et un ensemble d'interface destinés à permettre la charge de batteries électriques qui fournissent des tensions de même ordre et qui sont composées d'éléments rechargeables dont les natures sont susceptibles d'être de natures différentes d'une batterie à l'autre. Elle met en oeuvre un dispositif de charge apte à fournir au moins une tension de régulation constante appropriée à une batterie. Elle vise à assurer la protection des éléments d'une batterie contre les surtensions susceptibles d'apparaître en phase de charge.

L'agencement envisagé est du type de ceux qui permettent de passagèrement substituer une batterie à une autre source d'énergie pour alimenter un circuit d'utilisation, lorsque cette autre source n'est temporairement pas à même de le faire. La batterie préalablement chargée est, par exemple, maintenue en charge de manière permanente, selon une technique dite de batterie flottante ou "floating", lorsque la source fonctionne. Un tel agencement associe couramment une batterie, un dispositif permettant d'assurer la charge de la batterie à partir d'une source et un circuit d'utilisation, tous étant reliés entre eux de manière permanente. Il est notamment mis en oeuvre, dans cette configuration, au niveau d'équipements de télécommunications prévus pour fonctionner sans interruption.

L'agencement peut aussi être organisé d'une manière différente, afin que la batterie, qui permet d'alimenter un circuit d'utilisation, puisse être rechargée de manière intermittente, à partir d'une source et via un dispositif de charge. Ce dernier peut éventuellement permettre un maintien de charge, selon la technique évoquée ci-dessus, lorsque la source fonctionne. Tel est par exemple le cas, lorsque la batterie équipe un agencement disposant d'un dispositif de charge qui est alimenté par une source mise en activité à la demande et/ou en fonction des besoins, comme dans un véhicule électrique.

De tels agencements sont couramment équipés de moyens permettant d'assurer un équilibrage entre les divers éléments rechargeables qui constituent une batterie, afin d'en assurer une gestion optimale au cours du temps. De tels moyens sont notamment divulgués par le brevet européen 121547.

Il existe de nombreux dispositifs permettant de charger une batterie dans lesquels il est prévu une tension prédéterminée de régulation. Il existe aussi de nombreux dispositifs dans lesquels il est prévu la possibilité de sélectionner une ou des tensions de régulation parmi plusieurs possibles, en particulier pour permettre la charge de batteries différentes.

Du fait des standardisations prévues en matière de batteries rechargeables et de piles non rechargeables, il est souvent possible d'alimenter un même appareil, en lui fournissant une tension suffisante pour lui permettre de fonctionner, au moyen d'une batterie, c'est-à-dire d'un ensemble déterminé d'éléments de même nature rechargeables ou non, qui est choisie parmi plusieurs possibles, en fonction des besoins de l'utilisateur et/ou des disponibilités du moment en matière de batterie. Les éléments de batterie substituables les uns aux autres sont par exemple des éléments au plomb, alcalins ou lithium.

Toutefois, pour être réellement avantageuse, cette possibilité de substitution implique que les utilisateurs puissent charger au moins certaines des batteries de différentes natures au moyen d'un même dispositif, plutôt qu'à l'aide de dispositifs individuellement adaptés chacun à une batterie différente. La nécessité de disposer de dispositifs de charge différents présente des inconvénients certains pour les utilisateurs désireux de pouvoir utiliser des batteries de différentes natures, l'une à la place d'une autre, en fonction de leurs besoins ou disponibilités du moment, pour alimenter un même circuit d'utilisation dans le cadre d'un agencement déterminé.

Comme il est connu, les surtensions, susceptibles d'intervenir en phase de charge, peuvent avoir une influence néfaste sur les éléments de batterie qui y sont soumis et en particulier lorsque ces éléments sont plus sensibles aux surtensions que d'autres, comme cela est par exemple le cas avec les éléments Lithium.

Il est donc nécessaire de prendre des précautions pour charger une batterie à l'aide d'un dispositif prévu pour une autre, en se basant sur le fait que ces batteries ont sensiblement la même tension nominale.

Il est connu d'ajouter un organe de type survolteur-dévolteur dans le circuit électrique reliant un dispositif de charge à une batterie, si celle-ci est supervisée par un circuit de gestion qui permet de transmettre un signal de commande à l'organe survolteur-dévolteur pour modifier la tension fournie à la batterie. Ceci permet de diminuer cette tension quand un élément de batterie est trop chargé. Toutefois un tel élément additionnel est coûteux et il peut éventuellement être gênant, s'il n'est pas prévu de place pour lui au niveau de la batterie ou du dispositif de charge.

Il est aussi connu d'utiliser un dispositif de charge, par exemple un chargeur individuel usuel pour batterie au plomb, pour la recharge de batteries qui ont une nature différente, s'il est possible d'agir sur la tension de régulation fournie par ce dispositif de manière à éviter tout risque de surtension au niveau de chacun des éléments de la batterie dont la charge est réalisée.

Il existe des dispositifs de charge qui sont prévus pour recevoir un signal analogique de commande de tension de régulation. Toutefois un tel dispositif de charge n'est exploitable qu'avec une batterie à recharger à laquelle est associée une interface prévue pour fournir un signal analogique approprié de commande. Une telle interface présente des inconvénients qui correspondent à ceux que présente un organe survolteur-dévolteur additionnel et elle requiert une alimentation pour répondre à ses besoins.

Or, dans un certain nombre d'agencements où une batterie est mise en oeuvre en association avec un dispositif de charge, il est déjà prévu un circuit monté en parallèle à chaque élément rechargeable pour permettre de dériver au moins une partie du courant, qui est fourni à la batterie par le dispositif de charge et qui circule dans cet élément, lorsque la tension mesurée aux bornes de l'élément, par un montage de mesure qui lui est associé, s'élève au-delà d'une valeur de seuil déterminée.

Une telle organisation est plus particulièrement divulguée dans le brevet européen 121547 signalé plus haut. Les composants permettant de la constituer sont susceptibles d'être physiquement associés sous forme modulaire à l'élément rechargeable de batterie auquel ils sont affectés, ou éventuellement à un groupe de tels éléments, en une unité matérielle autonome. Une telle unité peut être connectée en série avec au moins une autre unité autonome identique pour former une batterie où un équilibrage est assuré élément par élément.

L'invention propose un procédé et un agencement permettant de réaliser, de manière simple et économique, la charge d'une batterie de tension nominale déterminée, sans restriction liée à la nature des éléments rechargeables constituant la batterie, à l'aide d'un dispositif de charge donné apte à fournir au moins une tension de régulation constante appropriée et en évitant de soumettre les éléments rechargeables à des surtensions dommageables, à partir du moment où ladite batterie présente une tension nominale en adéquation avec la ou les tensions de régulation que fournit le dispositif de charge.

Selon une caractéristique du procédé, selon l'invention, il est prévu les étapes suivantes :
- mesure permanente de la tension aux bornes de chacun des éléments rechargeables de la batterie ;
- activation d'un circuit de dérivation individuellement associé à chaque élément rechargeable par rapport auquel ce circuit est monté en parallèle, dès que la tension mesurée aux bornes de cet élément rechargeable dépasse une valeur déterminée de seuil minimal de régulation, fixée en fonction de la nature dudit élément rechargeable, et tant que ladite tension mesurée est supérieure à cette valeur de seuil minimal ;
- fourniture d'une indication relative au franchissement ou non d'une valeur de seuil maximal d'équilibrage, fixée en fonction de la nature d'un élément rechargeable, par la tension mesurée aux bornes de cet élément rechargeable ;
- traduction sous la forme d'un signal binaire unique des indications relatives au franchissement de seuil maximal respectivement obtenues pour chacun des éléments rechargeables à un instant donné, ce signal étant maintenu à une première valeur binaire, tant qu'aucune des tensions mesurées aux bornes des éléments rechargeables de la batterie n'est supérieure à la valeur de seuil maximal, et à une seconde valeur dans tout autre cas ;
- traduction du signal unique obtenu à partir des indications de franchissement de seuil maximal en un signal de commande de commutation d'une caractéristique de charge de batterie choisie entre deux caractéristiques susceptibles d'être sélectionnées, soit directement au niveau du dispositif de charge, soit par l'intermédiaire d'un dispositif auxiliaire associé à lui.

L'invention propose aussi un agencement incluant une batterie composée d'éléments rechargeables montés en série et un dispositif de charge apte à fournir au moins une tension de régulation constante pour la charge de la batterie. Cet agencement associe à la batterie :
- une interface individuelle, par élément rechargeable de batterie, incluant un premier montage de mesure de tension relié aux bornes de l'élément rechargeable considéré pour commander un circuit de dérivation de courant monté en parallèle à lui, afin de dériver au moins une partie du courant de charge qui lui est fourni, lorsque la tension mesurée aux bornes de cet élément rechargeable considéré s'élève au-dessus d'une valeur déterminée de seuil minimal de régulation, fixé en fonction de sa nature d'élément ;
- une interface commune à laquelle les interfaces individuelles sont reliées pour fournir chacune au moins une indication en liaison avec la tension mesurée pour l'élément rechargeable auquel elle est associée, ces indications étant exploitées pour la commande de la charge réalisée par le dispositif de charge.

Selon une caractéristique de l'invention, l'agencement comporte :
- des interfaces individuelles de batterie incluant chacune un second montage de mesure de tension pour déterminer le dépassement d'une valeur de seuil maximal d'équilibrage aux bornes de l'élément rechargeable, dit associé, auquel l'interface individuelle est affectée, à partir d'une mesure de tension effectuée aux bornes d'une résistance de mesure en série avec le dispositif de dérivation de l'interface entre les bornes de l'élément rechargeable associé, ainsi qu'un circuit constituant une porte de transmission logique, à fonction ET, par l'intermédiaire de laquelle est transmise, sous forme binaire, une indication relative au dépassement ou non de ladite valeur de seuil maximal d'équilibrage aux bornes dudit élément rechargeable associé,
- une interface commune traduisant toute indication relative au franchissement de valeur de seuil maximal d'équilibrage, qui lui est fournie par l'intermédiaire d'une chaîne de transmission où sont insérées en série les portes de transmission des interfaces individuelles, sous la forme d'un signal de commande de commutation de caractéristique de charge;
- un dispositif de charge dont au moins une caractéristique de charge de batterie est modifiée soit au niveau du dispositif lui-même, soit au niveau d'un dispositif auxiliaire associé, en fonction de la valeur dudit signal de commande de commutation de caractéristique.

L'invention propose aussi un ensemble d'interface pour batterie qui comporte :
- une interface individuelle, par élément rechargeable de batterie, chaque interface individuelle incluant un montage de mesure de tension, relié aux bornes de l'élément rechargeable considéré, pour commander un circuit de dérivation de courant monté en parallèle à cet élément, afin de dériver au moins une partie du courant de charge qui lui est fourni, lorsque la tension mesurée aux bornes dudit élément s'élève au-dessus d'une valeur déterminée de seuil minimal de régulation, fixée en fonction de sa nature d'élément ;
- une interface commune à laquelle les interfaces individuelles sont reliées pour fournir chacune au moins une indication en liaison avec la tension mesurée pour l'élément rechargeable auquel elle est associée, ces indications étant exploitées pour la commande de la charge réalisée par un dispositif de charge ;

Selon une caractéristique de l'invention, ledit ensemble comporte :
-- des interfaces individuelles de batterie incluant chacune un second montage de mesure de tension pour déterminer le dépassement d'une valeur de seuil maximal d'équilibrage aux bornes de l'élément rechargeable, dit associé, auquel l'interface individuelle est affectée, à partir d'une mesure de tension effectuée aux bornes d'une résistance de mesure en série avec le dispositif de dérivation de l'interface entre les bornes de l'élément rechargeable associé, ainsi qu'un circuit constituant une porte de transmission logique, à fonction ET, par l'intermédiaire de laquelle est transmise, sous forme binaire, une indication relative au dépassement ou non de ladite valeur de seuil maximal d'équilibrage aux bornes dudit élément rechargeable associé,
-- une interface commune traduisant toute indication relative au franchissement de valeur de seuil maximal d'équilibrage, qui lui est fournie par l'intermédiaire d'une chaîne de transmission où sont insérées en série les portes de transmission des interfaces individuelles, sous la forme d'un signal de commande de commutation de caractéristique de charge prévu pour être exploité par un dispositif de charge, soit directement, soit via un dispositif auxiliaire associé à ce dispositif.

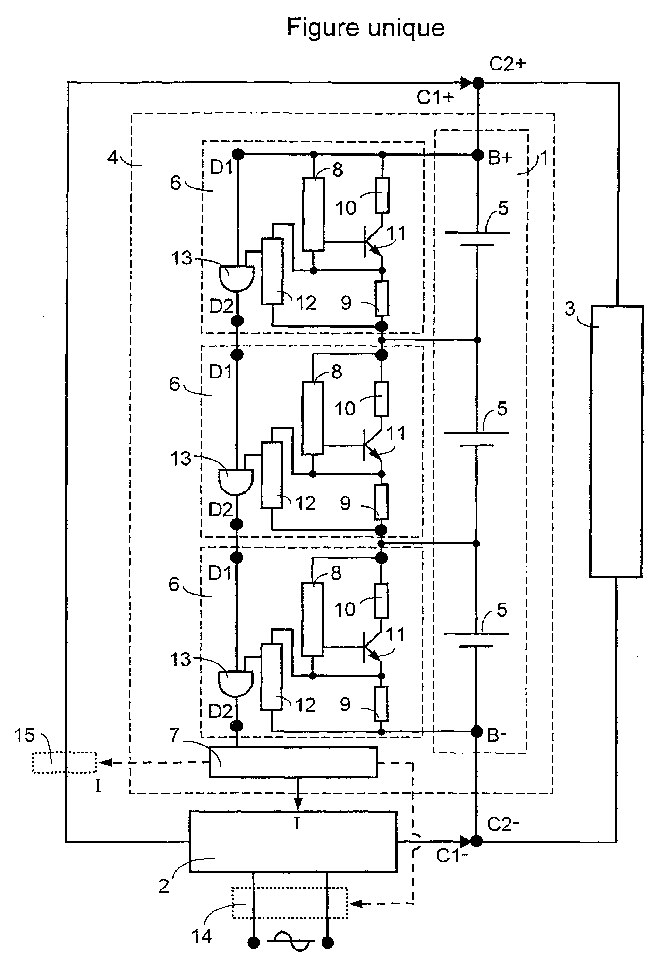

L'invention, ses caractéristiques et ses avantages sont précisés dans la description qui suit en liaison avec la figure unique définie ci-dessous.

Cette figure unique présente un schéma de principe d'un exemple d'agencement.

Cet agencement comporte une batterie électrique 1, un dispositif 2 permettant la charge de la batterie à partir d'une source non représentée et un circuit d'utilisation 3 qu'il est prévu de pouvoir alimenter par la batterie, en liaison ou non avec la source.

La batterie est composée de manière modulaire et constitue un ensemble regroupant une suite de modules montés en série, chaque module étant constitué par au moins un élément rechargeable 5. Pour des raisons de simplification de l'exposé, il n'est fait état que d'éléments rechargeables dans le reste de la demande, étant entendu que l'invention peut éventuellement être mise en oeuvre avec des éléments rechargeables regroupés par modules, comme indiqué ci-dessus.

La batterie 1, qui est représentée, comporte deux bornes d'extrémité B+ et B- entre lesquelles trois éléments rechargeables 5 sont disposés en série.

Le dispositif de charge 2 est supposé alimenté en énergie électrique par l'intermédiaire d'une source non représentée, par exemple un réseau électrique de distribution ou un générateur électrique indépendant. Il est ici supposé que ce dispositif de charge 2 se raccorde aux bornes d'extrémité d'une batterie à charger par l'intermédiaire d'organes de connexion, symbolisés sous les références C1 + et C1-.

Dans la réalisation illustrée, il est supposé que le circuit d'utilisation 3, que la batterie 1 doit permettre d'alimenter, vient se raccorder à la batterie par l'intermédiaire d'organes de connexion symbolisés sous les références C2+ et C2-.

Les organes de connexion évoqués ci-dessus sont susceptibles d'être de type connu et ne sont donc pas détaillés ici, le circuit d'utilisation 3 est par exemple un équipement fonctionnel d'un système ou un appareil indépendant.

L'agencement envisagé peut permettre de recharger la batterie 1 au moyen du dispositif de charge 2, tout en alimentant le circuit d'utilisation 3, si besoin est et si le dispositif de charge et le circuit d'alimentation sont simultanément reliés aux bornes d'extrémité de la batterie.

Comme indiqué dans le préambule, il est envisagé de pouvoir mettre en oeuvre différentes batteries, suivant les besoins de l'utilisateur ou la disponibilité du moment en matière de batterie, à l'aide d'un dispositif de charge et en particulier dans le cadre d'un agencement selon l'invention. Il est prévu que le dispositif de charge soit apte à fournir au moins une caractéristique de charge déterminée. Cette caractéristique correspond par exemple à une tension de régulation déterminée. Il est aussi supposé que les batteries ont des tensions nominales respectives en adéquation avec la ou les tensions notamment de régulation susceptibles d'être fournies par le dispositif de charge.

Il peut par exemple être envisagé la substitution d'une batterie de 48 volts composée d'éléments lithium, à une batterie composée d'éléments au plomb ou d'éléments alcalins, les nombres d'éléments des deux batteries n'étant alors pas identiques.

Dans ce cas il est prévu que chacun des éléments lithium rechargeables 5 de la batterie soit équipé d'un circuit de dérivation monté en parallèle à lui. Chaque circuit permet de dériver au moins une partie du courant, fourni à la batterie par le dispositif de charge 2, qui circule dans un élément rechargeable, lorsque la tension mesurée aux bornes de cet élément s'élève au-delà d'une valeur de seuil minimal d'équilibrage V1, déterminée. Cette valeur de seuil est fixée en fonction de la nature des éléments rechargeables.

Dans une forme préférée de réalisation, le circuit de dérivation affecté à chaque élément rechargeable 5 d'une batterie est incorporé dans une interface individuelle 6 qui est associée à cet élément. Il est prévu une interface commune 7 à laquelle les interfaces individuelles sont communément reliées, par exemple par une liaison en chaîne comme montré sur la figure unique.

Chaque interface individuelle 6 comporte de plus des moyens prévus pour permettre la mise en oeuvre du procédé selon l'invention, en coopération avec l'interface commune 7.

Le circuit de dérivation que comporte chaque interface individuelle fonctionne par exemple selon le principe décrit dans le brevet européen 121547, évoqué plus haut, qui est succinctement évoqué ci-dessous. Un premier montage de mesure de tension 8 est relié aux bornes de l'élément rechargeable 5, ici via une résistance de mesure 9, reliée à la borne négative de l'élément.

Le montage de mesure 8 d'une interface individuelle 6 est supposé du genre décrit dans le brevet européen cité ci-dessus, il commande donc la mise en circuit d'une branche de dérivation, constituée par une résistance 10 et par un transistor 11, ici supposée montée en série avec la résistance de mesure 9, entre les bornes de l'élément rechargeable 5 auquel l'interface est associée. Comme connu, il n'y a pas de courant passant au travers de la branche de dérivation, tant que la tension v évaluée par le montage de mesure 8 n'a pas atteint une valeur v1 pour laquelle la tension aux bornes de l'élément rechargeable 5 est égale à la valeur de seuil minimal V1. Dès que cette valeur v1 est dépassée, le montage de mesure commande le transistor 11 pour qu'il dérive dans la branche de dérivation une partie du courant fourni à l'élément rechargeable par le dispositif de charge. Le courant dérivé augmente progressivement si la tension image v évaluée par le montage de mesure 8 traduit une augmentation progressive de la tension présente aux bornes de l'élément rechargeable 5.

Selon l'invention, chaque interface individuelle 6 comporte un second montage de mesure de tension 12 qui est agencé pour fournir à l'interface commune 7 une indication, de type binaire, relative à la tension présente aux bornes de l'élément rechargeable 5 de batterie 1 qu'il surveille. Cette indication se traduit préférablement par un signal binaire de niveau zéro, lorsque la tension aux bornes de l'élément 5 dépasse une valeur de seuil maximal d'équilibrage déterminée V2, supérieure à la valeur de seuil minimal V1. Cette tension de seuil maximal V2 est choisie inférieure ou au plus égale à la tension maximale Vm admissible aux bornes d'un des éléments rechargeables qui constitue la batterie 1, les tensions V2 et Vm étant fixées en fonction de la nature des éléments qui constituent cette batterie. Dans une forme préférée de réalisation, le non-dépassement et le dépassement de seuil qui correspondent respectivement l'un à un signal binaire de niveau un et l'autre à un signal de niveau zéro. L'indication fournie par un montage de mesure 12 est transmise de l'interface individuelle 6 qui contient ce montage vers l'interface commune 7 par l'intermédiaire d'un circuit qui constitue une porte de transmission 13 et qui a une fonction logique ET.

Chaque porte de transmission 13 comporte une première entrée par l'intermédiaire de laquelle elle reçoit l'indication fournie par le montage de mesure 12 de l'interface individuelle qui la comporte et une seconde entrée dite de chaînage. L'entrée de chaînage d'une porte de transmission d'une interface individuelle est reliée à la sortie de la porte de transmission qui la précède dans la chaîne, l'entrée de chaînage de l'interface située en tête de chaîne recevant systématiquement un signal de niveau binaire un. En conséquence la porte de transmission 13 de l'interface individuelle de tête doit produire un signal binaire de niveau un en sortie, en l'absence d'indication de dépassement reçue du montage de mesure 12 auquel elle est reliée, puisqu'elle a alors ces deux entrées au niveau un. Il en est de même pour les portes de transmission 13 des interfaces individuelles suivantes de la chaîne, si aucune indication de dépassement n'est fournie par les montages de mesure 12 respectifs de ces interfaces, un signal de niveau un est fourni dans ce cas à l'interface commune 7. Ce signal se traduit pratiquement par la circulation d'un courant au long de la chaîne reliant les interfaces individuelles à l'interface commune.

Dans la réalisation présentée à titre d'exemple, le potentiel positif, qui est présent au niveau de la borne positive B+ de la batterie 1, est donc appliqué à l'entrée de chaînage de la porte de transmission 13 que comporte l'interface individuelle 6 située en tête de chaîne. La chaîne est obtenue par mise en série des interfaces individuelles 6 qui comportent chacune une borne d'entrée de chaîne D1 et une borne de sortie de chaîne D2 entre lesquelles est positionnée la porte de transmission 13 de l'interface. Le signalement d'un dépassement de valeur de seuil maximal d'équilibrage V2, aux bornes d'un élément 5 par un montage de mesure 12, correspond à l'apparition d'un signal binaire de niveau zéro au niveau de la première entrée de la porte de transmission 13 commandée par ce montage de mesure et donc en sortie de cette porte de transmission. Le courant circulant antérieurement au travers de la chaîne unissant les interfaces individuelles à l'interface commune est alors interrompu. Une telle solution permet aussi d'agir sur le dispositif de charge en cas de rupture de continuité de la chaîne, de la même manière qu'en cas de dépassement de la tension de seuil maximal d'équilibrage V2.

L'interface commune 7 est prévue de manière à agir par l'intermédiaire d'un signal de commutation de caractéristique de charge au niveau d'une fonction de commutation incorporée ou associée au dispositif de charge 2 auquel elle est reliée. Dans une première forme de réalisation destinée aux dispositifs de charge qui sont prévus pour fournir une seule tension de régulation constante en phase de charge de batterie, cette fonction assure une commutation de puissance entre une première position pour laquelle le courant de charge que produit le dispositif de charge est fourni à la batterie, lorsque le signal binaire reçu par l'interface commune est de niveau un, et une seconde position pour laquelle ce courant n'est plus fourni, lorsque le signal binaire reçu par l'interface commune est de niveau zéro.

Le fonctionnement par tout ou rien, qui est obtenu, peut être produit au niveau du chargeur qui est alors supposé comporter des moyens de commutation appropriés qui sont prévus pour être commandés au travers d'une entrée de commande I, par l'intermédiaire de laquelle ces moyens usuels, non illustrés ici, sont actionnés en fonction du niveau du signal binaire reçu par l'interface commune.

Ce fonctionnement peut aussi être obtenu par action sur un organe commutateur 14, extérieur au dispositif de charge. Cet organe commutateur est, par exemple, inséré entre le dispositif de charge et un réseau de distribution d'énergie par lequel ce dispositif de charge est alimenté, il est alors exploité pour commander par tout ou rien l'alimentation du dispositif de charge. Il peut éventuellement être incorporé dans l'interface commune 7. Il est également possible de positionner un organe commutateur 15 en sortie du dispositif de charge dans le même but final de contrôle de la puissance fournie à des fins de charge à la batterie, cet organe étant commandé par l'interface commune 7, dans les mêmes conditions que l'organe commutateur 14 envisagé plus haut.

La charge d'une batterie 1, par le dispositif de charge 2 défini ci-dessus, est assurée à partir du moment où la tension, aux bornes de chacun des éléments rechargeables 5 constituant cette batterie, est inférieure à la valeur de seuil maximal V2 qui est identiquement fixée par les interfaces individuelles pour chacun des éléments. Chaque élément rechargeable 5 reçoit le courant fourni sous tension constante par le dispositif de charge, tant que ce courant est présent et qu'il n'est pas dérivé au moins en partie par le circuit de dérivation associé à cet élément rechargeable.

Le circuit de dérivation de tout élément rechargeable de batterie, aux bornes duquel la tension mesurée est supérieure à la valeur de seuil minimal V1, se maintient en fonctionnement. Il assure une décharge partielle de l'élément rechargeable qui peut se poursuivre jusqu'au moment où la tension mesurée aux bornes de cet élément rechargeable devient inférieure à la valeur de seul minimal V1.

Il se produit donc un équilibrage de la batterie par décharge des éléments les plus chargés. Dès que les tensions mesurées aux bornes des éléments de la batterie 1 sont toutes inférieures à la valeur de seuil maximal V2, la chaîne de transmission série entre interfaces individuelles est rétablie et permet de commander le dispositif de charge par l'intermédiaire de l'interface commune 7 de manière qu'il fournisse à nouveau un courant de charge à la batterie qu'il soumet à la tension de régulation constante précédemment appliquée.

La charge d'une batterie se traduit par une succession de phases de charge des éléments qu'elle comporte, entrecoupées de phases pendant lesquelles une légère décharge de la batterie se produit du fait de la consommation d'énergie du circuit d'utilisation qu'elle alimente et/ou du fonctionnement des circuits de dérivation associés aux éléments de cette batterie. Chacun des éléments de la batterie s'équilibre donc en se rechargeant pendant les phases où le chargeur est rendu actif et en se déchargeant pendant les phases où le chargeur est rendu inactif. Si l'équilibrage se réalise dans de bonnes conditions, un fonctionnement à tension constante en "floating" peut être obtenu pour un circuit d'utilisation, lorsque la batterie est chargée. Ce fonctionnement en "floating" peut être obtenu de manière permanente dans le cadre d'un agencement où le dispositif de charge est en service et en liaison avec une batterie et un dispositif d'utilisation de manière permanente. Il peut aussi éventuellement être obtenu pendant les phases où le dispositif de charge est en service et en liaison avec au moins la batterie, dans le cadre d'un agencement où ce dispositif de charge n'est mis en activité que de manière intermittente.

Dans une seconde variante de réalisation, il est supposé que le dispositif de charge 1 est un dispositif permettant d'obtenir deux paliers de tension constante de régulation Vr1 et Vr2, plutôt qu'un seul, en particulier en fin de charge. Ces deux paliers sont le plus souvent susceptibles d'être obtenus par des moyens prévus dès l'origine dans le dispositif de charge, l'entrée de commande I est alors utilisée pour commander les moyens, non représentés, qui permettent de commuter d'un palier de tension à l'autre.

Il est ici à nouveau supposé que les batteries, de différentes natures sont associées à des interfaces individuelles 6 et à une interface commune 7, pour leurs charges par un dispositif de charge 2. Comme précédemment, tant que la tension mesurée aux bornes de chacun des éléments d'une batterie reste inférieure à la valeur de seuil minimal V1, il y a transmission d'un élément binaire de niveau un par les portes de transmission 13 des interfaces individuelles 6 vers l'interface commune 7. Par contre, le dépassement de la valeur de seuil maximal V2, par une tension mesurée aux bornes d'un élément rechargeable de batterie, entraîne une interruption de la chaîne de transmission et en conséquence l'apparition d'un signal binaire de niveau zéro au niveau de l'interface commune.

Le passage du niveau un au niveau zéro, du signal binaire attaquant l'interface commune, est utilisé pour commander la substitution, plus particulièrement en fin de charge, de la tension de régulation Vr2 la plus élevée obtenue à partir du dispositif de charge 2 pour la charge de la batterie à la tension de régulation Vr1 prévue moindre. Le passage du niveau zéro au niveau un du signal binaire appliqué à l'interface commune, via la chaîne de transmission série, est utilisé pour commander une commutation en sens inverse de la tension Vr1 à la tension Vr2 plus faible.

La charge d'une batterie dans ces conditions s'effectue par une succession de phases de charge pendant lesquelles la batterie est soumise à la tension de régulation la plus forte Vr2, tant que les tensions mesurées aux bornes des éléments de cette batterie sont inférieures à la valeur de seuil minimal V1. Ces phases sont entrecoupées de phases pendant lesquelles la batterie est soumise à une tension de régulation Vr1 plus faible, dès que et tant que la tension mesurée aux bornes d'un élément rechargeable est supérieure à la valeur de seuil maximal V2. Comme déjà envisagé précédemment, suivant le choix effectué en matière d'agencement batterie-dispositif de charge-circuit d'utilisation, le dispositif de charge 2 peut être inclus dans une alimentation, permettant parallèlement d'alimenter le circuit d'utilisation, si désiré.

Il est de plus généralement prévu un arrêt de la fourniture de courant de charge à la batterie dans le cadre de la seconde variante décrite ci-dessus, à partir du moment où la tension mesurée aux bornes d'un élément rechargeable de batterie ou à défaut de la batterie dépasse une valeur limite, supérieure à la tension de seuil maximal, au-delà de laquelle des surtensions dommageables pour les éléments de batterie sont susceptibles de se produire.

Un équilibrage s'effectue dans des conditions analogues à celles qui ont été évoquées plus haut, si les éléments rechargeables de la batterie sont en bon état. Le dispositif de charge 2 est alors susceptible d'être en fonctionnement de manière permanente, lorsqu'il est en liaison avec la batterie. Des commutations successives d'une tension de régulation à l'autre, sont alors réalisées, sous la commande des montages de mesure affectés aux éléments rechargeables qui constituent la batterie.

## Revendications

1. Procédé de charge d'une batterie électrique (1) au moyen d'un dispositif de charge (2) apte à fournir au moins une tension de régulation constante appropriée à la batterie à charger, quelle que soit la nature des éléments rechargeables constituant la batterie, à partir du moment où ladite batterie présente une tension nominale en adéquation avec la ou les tensions de régulation que fournit le dispositif de charge, ledit procédé étant **caractérisé en ce qu'**il comporte les étapes suivantes :
- mesure permanente de la tension aux bornes de chacun des éléments rechargeables (5) de la batterie ;
- activation d'un circuit de dérivation (10, 11) individuellement associé à chaque élément rechargeable par rapport auquel ce circuit est monté en parallèle, dès que la tension mesurée aux bornes de cet élément rechargeable dépasse une valeur déterminée de seuil minimal de régulation (V1), fixée en fonction de la nature dudit élément rechargeable, et tant que ladite tension mesurée est supérieure à cette valeur de seuil minimal ;
- fourniture d'une indication relative au franchissement ou non d'une valeur de seuil maximal d'équilibrage (V2), fixée en fonction de la nature d'un élément rechargeable, par la tension mesurée aux bornes de cet élément rechargeable ;
- traduction sous la forme d'un signal binaire unique des indications relatives au franchissement de seuil maximal respectivement obtenues pour chacun des éléments rechargeables à un instant donné, ce signal étant maintenu à une première valeur binaire, tant qu'aucune des tensions mesurées aux bornes des éléments rechargeables de la batterie n'est supérieure à la valeur de seuil maximal, et à une seconde valeur dans tout autre cas ;
- traduction du signal unique obtenu à partir des indications de franchissement de seuil maximal en un signal de commande de commutation d'une caractéristique de charge de batterie choisie entre deux caractéristiques susceptibles d'être sélectionnées, soit directement au niveau du dispositif de charge, soit par l'intermédiaire d'un dispositif auxiliaire (14 ou 15) associé à lui.

2. Procédé, selon la revendication 1, dans lequel le signal de commande de commutation de caractéristique de charge est un signal agissant sur une fonction de commutation de puissance prévue au niveau du dispositif de charge, (2), ou incluse dans un dispositif auxiliaire (14) disposé entre ce dispositif et une source d'énergie qui l'alimente, de manière à permettre la fourniture de courant de charge à la batterie, lorsque les tensions respectivement mesurées aux bornes des éléments rechargeables sont inférieures à la valeur de seuil maximal d'équilibrage (V2) et pour assurer l'arrêt du courant de charge fourni à la batterie, dès que la tension mesurée aux bornes d'un des éléments rechargeables de batterie est supérieure à cette valeur de seuil maximal.

3. Procédé, selon la revendication 1, dans lequel le signal de commande de commutation de caractéristique de charge est un signal agissant pour commander la substitution d'une tension de régulation de charge à une autre au niveau du dispositif de charge (2), de manière à commander la commutation de celle des deux tensions de régulation (Vr2) qui est la plus élevée à celle qui est la moins élevée (Vr1), lorsque la tension mesurée aux bornes d'un élément rechargeable de batterie est supérieure à la valeur de seuil maximal d'équilibrage (V2) et pour commuter de la tension de régulation la moins élevée à la tension de régulation la plus élevée, lorsque les tensions respectivement mesurées aux bornes des éléments rechargeables sont inférieures à ladite valeur de seuil maximal d'équilibrage.

4. Agencement incluant une batterie composée d'éléments rechargeables montés en série et un dispositif de charge (2) apte à fournir au moins une tension de régulation constante pour la charge de la batterie, lorsque sont associés à la batterie (1) :
- une interface individuelle (6), par élément rechargeable (5) de batterie, incluant un premier montage de mesure de tension (8) relié aux bornes de l'élément rechargeable considéré pour commander un circuit de dérivation de courant (10, 11) monté en parallèle à lui, afin de dériver au moins une partie du courant de charge qui lui est fourni, lorsque la tension mesurée aux bornes de cet élément rechargeable considéré s'élève au-dessus d'une valeur déterminée de seuil minimal de régulation (V1), fixé en fonction de sa nature d'élément ;
- une interface commune (7) à laquelle les interfaces individuelles sont reliées pour fournir chacune au moins une indication en liaison avec la tension mesurée pour l'élément rechargeable auquel elle est associée, ces indications étant exploitées pour la commande de la charge réalisée par le dispositif de charge ; ledit agencement étant **caractérisé en ce qu'**il comporte :
-- des interfaces individuelles de batterie incluant chacune un second montage de mesure de tension (12) pour déterminer le dépassement d'une valeur de seuil maximal d'équilibrage (V2) aux bornes de l'élément rechargeable, dit associé, auquel l'interface individuelle est affectée, à partir d'une mesure de tension effectuée aux bornes d'une résistance de mesure (9) en série avec le dispositif de dérivation de l'interface entre les bornes de l'élément rechargeable associé, ainsi qu'un circuit constituant une porte de transmission logique à fonction ET (13) par l'intermédiaire de laquelle est transmise, sous forme binaire, une indication relative au dépassement ou non de ladite valeur de seuil maximal d'équilibrage aux bornes dudit élément rechargeable associé,
-- une interface commune traduisant toute indication relative au franchissement de valeur de seuil maximal d'équilibrage, qui lui est fournie par l'intermédiaire d'une chaîne de transmission où sont insérées en série les portes de transmission des interfaces individuelles, sous la forme d'un signal de commande de commutation de caractéristique de charge;
-- un dispositif de charge (2) dont au moins une caractéristique de charge de batterie est modifiée soit au niveau du dispositif lui-même, soit au niveau d'un dispositif auxiliaire (14 ou 15) associé, en fonction de la valeur dudit signal de commande de commutation de caractéristique.

5. Agencement, selon la revendication 4, dans lequel le signal d'indication de franchissement qui est fourni à l'interface commune par l'intermédiaire de la chaîne de transmission série est un signal dont la valeur binaire est un, lorsque les indications relatives au franchissement respectivement fournies par les portes de transmission des interfaces individuelles traduisent que les tensions présentes aux bornes des éléments de la batterie sont les montages de mesure (8) des interfaces individuelles (6) sont inférieures à la valeur de seuil maximal d'équilibrage (V2) fixée pour les éléments constituant la batterie.

6. Agencement, selon l'une des revendications 4 ou 5, dans lequel la modification de caractéristique de charge réalisée en fonction de la valeur du signal de commande de commutation se traduit par la coupure de la fourniture du courant de charge fourni par le dispositif de charge à la batterie, lorsqu'il est déterminé au niveau d'une interface individuelle qu'une tension présente aux bornes d'un des éléments d'une batterie est supérieure à la valeur de seuil maximal d'équilibrage (V2) fixée pour chacun des éléments de cette batterie, le courant de charge étant établi, lorsqu'il est déterminé qu'aucune tension présente aux bornes d'un des éléments n'est supérieure à cette valeur de seuil.

7. Agencement, selon l'une des revendications 4 ou 5, dans lequel la modification de caractéristique de charge réalisée en fonction de la valeur du signal de commande de commutation se traduit par un changement d'une valeur à une autre de la tension de régulation qui est produite par le chargeur en fin de charge d'une batterie, le passage de la valeur la plus élevée (Vr2) à la valeur la plus faible (Vr1) étant réalisé, lorsqu'il est déterminé au niveau d'une interface individuelle qu'une tension présente aux bornes d'un des éléments d'une batterie est supérieure à la valeur de seuil maximal d'équilibrage (V2) fixée pour chacun des éléments de cette batterie, le passage inverse étant réalisé, lorsqu'il est déterminé qu'aucune tension présente aux bornes d'un des éléments n'est supérieure à cette valeur de seuil.

8. Ensemble d'interface, pour batterie composée d'éléments rechargeables, qui comporte :
- une interface individuelle (6), par élément rechargeable (5) de batterie, chaque interface individuelle incluant un montage de mesure de tension (8) relié aux bornes d'un des éléments rechargeables pour commander un circuit de dérivation de courant (10, 11) monté en parallèle à cet élément, afin de dériver au moins une partie du courant de charge qui lui est fourni, lorsque la tension mesurée aux bornes de cet élément s'élève au-dessus d'une valeur déterminée de seuil minimal de régulation (V1), fixée en fonction de sa nature d'élément ;
- une interface commune (7) à laquelle les interfaces individuelles sont reliées pour fournir chacune au moins une indication en liaison avec la tension mesurée pour l'élément rechargeable auquel elle est associée, ces indications étant exploitées pour la commande de la charge réalisée par un dispositif de charge ; ledit ensemble étant **caractérisé en ce qu'**il comporte :
-- des interfaces individuelles de batterie incluant chacune un second montage de mesure de tension (12) pour déterminer le dépassement d'une valeur de seuil maximal d'équilibrage (V2) aux bornes de l'élément rechargeable, dit associé, auquel l'interface individuelle est affectée, à partir d'une mesure de tension effectuée aux bornes d'une résistance de mesure (9) en série avec le dispositif de dérivation de l'interface entre les bornes de l'élément rechargeable associé, ainsi qu'un circuit constituant une porte de transmission logique à fonction ET (13) par l'intermédiaire de laquelle est transmise, sous forme binaire, une indication relative au dépassement ou non de ladite valeur de seuil maximal d'équilibrage aux bornes dudit élément rechargeable associé,
-- une interface commune traduisant toute indication relative au franchissement de valeur de seuil maximal d'équilibrage, qui lui est fournie par l'intermédiaire d'une chaîne de transmission où sont insérées en série les portes de transmission des interfaces individuelles, sous la forme d'un signal de commande de commutation de caractéristique de charge prévu pour être exploité par un dispositif de charge, soit directement, soit via un dispositif auxiliaire associé à ce dispositif.

## Claims

1. A method of charging an electrical battery (1) by means of a charger device (2) able to supply at least one appropriate constant regulation voltage to the battery to be charged, regardless of the nature of the rechargeable cells constituting said battery, provided that said battery has a nominal voltage compatible with said regulation voltage or voltages that said charger device supplies, said method being **characterized by** including the following steps:
- continuously measuring the voltage at terminals of each rechargeable cell (5) of said battery;
- activating an associated individual shunt circuit (10, 11) connected in parallel with each rechargeable cell as soon as the voltage measured at said terminals of said rechargeable cell exceeds a particular regulation minimum threshold value (V1) fixed as a function of the nature of said rechargeable cell and for as long as said measured voltage is above said minimum threshold value;
- supplying an indication as to whether a balancing maximum threshold value (V2) fixed as a function of the nature of a rechargeable cell is exceeded or not by said voltage measured at said terminals of said rechargeable cell;
- translating into the form of a single binary signal respective indications as to whether said maximum threshold is exceeded or not obtained for each of said rechargeable cells at a given time, said single signal being maintained at a first binary value for as long as none of said voltages measured at said terminals of said rechargeable cells of said battery exceeds said maximum threshold value and at a second value otherwise; and
- translating said single signal obtained from said indications as to whether said maximum threshold is exceeded or not into a signal controlling switching of a battery charging characteristic between two characteristics that can be selected either directly at the charger device or via an auxiliary device (14 or 15) associated therewith.

2. The method claimed in claim 1 wherein said charge characteristic switching control signal operates on a power switching function of said charger device (2) or included in an auxiliary device (14) disposed between said charger device and its power supply to enable the supply of charging current to said battery if said respective voltages measured at said terminals of said rechargeable cells are below said balancing maximum threshold value (V2) and to stop the supply of charging current to said battery as soon as the voltage measured at the terminals of one of said rechargeable battery cells exceeds said maximum threshold value.

3. The method claimed in claim 1 wherein said charge characteristic switching control signal controls the substitution of one charge regulation voltage for another in said charger device (2) to control switching from the higher (Vr2) to the lower (Vr1) of said two regulation voltages if said voltage measured at said terminals of a rechargeable battery cell exceeds said balancing maximum threshold value (V2) and to switch from said lower to said higher regulation voltage if said respective voltages measured at said terminals of said rechargeable cells are below said balancing maximum threshold value.

4. An arrangement including a battery made up of rechargeable cells connected in series and a charger device (2) able to provide at least one constant regulation voltage for charging said battery, when said battery (1) is associated with:
- an individual interface (6) for each rechargeable cell (5) of said battery, including a first voltage measuring circuit (8) connected to terminals of the rechargeable cell concerned to control a current shunt circuit (10, 11) connected in parallel with it in order to shunt at least some of the charging current that is supplied to it if said voltage measured at said terminals of said rechargeable cell exceeds a particular regulation minimum threshold value (V1) fixed as a function of the nature of said cell,
- a common interface (7) to which said individual interfaces are connected and to which each supplies at least one indication of said measured voltage for the associated rechargeable cell, said indication being used to control charging by said charger device, said arrangement being **characterized in that** it comprises:
- individual battery interfaces each including a second voltage measuring circuit (12) for determining if a balancing maximum threshold value (V2) is exceeded at said terminals of the associated rechargeable cell to which said individual interface is assigned, on the basis of a voltage measured across a measuring resistor (9) in series with said shunt device of said interface between said terminals of said associated rechargeable cell, and a circuit constituting a transmission AND logic gate (13) which transmits a binary indication as to whether said balancing maximum threshold value is exceeded or not at said terminals of said associated rechargeable cell;
- a common interface translating any indication relating to said balancing maximum threshold value being exceeded supplied to it by means of a transmission chain into which said transmission gates of said individual interfaces are inserted in series in the form of a charge characteristic switching control signal;
- a charger device (2) of which at least one battery charge characteristic is modified either in said charger device itself or in an associated auxiliary device (14 or 15) as a function of said characteristic switching control signal.

5. The arrangement claimed in claim 4 wherein said signal indicating that a threshold value is exceeded which is supplied to said common interface via said serial transmission chain has a binary value of I if respective indications as to whether said threshold is exceeded or not supplied by said transmission gates of said individual interfaces reflect the fact that said voltages at said terminals of said cells of said battery by said measuring circuits (8) of said individual interfaces (6) are below said balancing maximum threshold value (V2) fixed for said cells constituting said battery.

6. The arrangement claimed in claim 4 or 5 wherein modifying said charge characteristic as a function of said switching control signal cuts off said charge current supplied by said charger device to said battery if an individual interface determines that the voltage at said terminals of a battery cell is above said balancing maximum threshold value (V2) fixed for each cell of said battery, said charging current being supplied if it is determined that no voltage at said terminals of a cell exceeds said threshold value.

7. The arrangement claimed in claim 4 or 5, wherein modifying the charge characteristic as a function of said switching control signal changes from one value to the other of said regulation voltage produced by said charger at the end of charging a battery, a change from said highest value (Vr2) to said lowest value (Vr1) being effected if an individual interface determines that a voltage at said terminals of a battery cell exceeds said balancing maximum threshold value (V2) fixed for each cell of said battery, and the reverse change being effected if it is determined that no voltage at said terminals of one of said cells exceeds said threshold value.

8. An interface system for a battery made up of rechargeable cells, which system includes:
- an individual interface (6) for each rechargeable battery cell (5), each individual interface including a voltage measuring circuit (8) connected to terminals of one of said rechargeable cells to control a current shunt circuit (10, 11) connected in parallel with said cell in order to shunt at least some of the charging current applied to it if the voltage measured at said terminals of said cell exceeds a particular regulation minimum threshold value (V1) fixed as a function of the nature of said cell,
- a common interface (7) to which said individual interfaces are connected and to which each supplies at least one indication of said measured voltage for the associated rechargeable cell, said indication being used to control charging by said charger device, said arrangement being **characterized in that** it comprises:
- individual battery interfaces each including a second voltage measuring circuit (12) for determining if a balancing maximum threshold value (V2) is exceeded at said terminals of the associated rechargeable cell to which said individual interface is assigned, on the basis of a voltage measured across a measuring resistor (9) in series with said shunt device of said interface between said terminals of said associated rechargeable cell, and a circuit constituting a transmission AND logic gate (13) which transmits a binary indication as to whether said balancing maximum threshold value is exceeded or not at said terminals of said associated rechargeable cell;
- a common interface translating any indication relating to said balancing maximum threshold value being exceeded supplied to it by means of a transmission chain into which said transmission gates of said individual interfaces are inserted in series in the form of a charge characteristic switching control signal provided for use by a charging device either directly or via an auxiliary device associated therewith.

## Patentansprüche

1. Verfahren zum Aufladen einer Batterie (1) mittels eines Ladegerätes (2) das fähig ist wenigstens eine geeignete dauernde Regulierungs-Spannung zur Batterie die aufgeladen werden soll, zu liefern, ohne Rücksicht auf die Natur der wiederaufladbaren Zellen, die die Batterie bilden, vorausgesetzt daß die Batterie eine nominale Spannung hat die kompatibel mit der besagten Regulierungs-Spannung oder Spannungen, die das Ladegerät liefert, ist, wobei das Verfahren durch folgende Schritte **gekennzeichnet** ist:
- das dauernde Messen der Klemmspannung jeder wiederaufladbaren Zelle (5) der Batterie;
- das Aktivieren einer zugehörigen individuellen Abzweig-Schaltung (10, 11) in Parallele mit jeder wiederaufladbaren Zelle, wenn die gemessene Klemmspannung der wiederaufladbaren Zelle einen besonderen minimalen, von der Natur der wiederaufladbaren Zelle abhängenden, Regulierungsschwellwert (V1) übersteigt, und solange die gemessene Spannung den minimalen Schwellwert übersteigt;
- das Liefern eines Anzeichens das angibt, ob die Spannung, die bei den Klemmen der wiederaufladbaren Zelle gemessen wird, einen maximalen Gleichgewichtsschwellwert (V2) der von der Natur einer wiederaufladbaren Zelle abhängt, überstiegen oder nicht überstiegen wird,
- das Übersetzen in die Form eines einzelnen binären Signals jeweiliger Anzeichen die angeben ob die maximale Schwelle überstiegen oder nicht überstiegen ist für jede der wiederaufladbaren Zellen zu einer gegeben Zeit, wobei das einzelne Signal bei einem ersten binären Wert beibehalten wird so lange keine der Spannungen, die an den Klemmen der besagten wiederaufladbaren Zellen der Batterie gemessen werden den maximalen Schwellwert übersteigt, und ansonsten bei einem zweiten Wert; und
- das Übersetzen von besagten einzelnen Signals, das von den Anzeichen die angeben, ob die maximale Schwelle überstiegen ist oder nicht, erhalten wird, in ein Steuersignal für das Umschalten eines Aufladekennwertes der Batterie, das zwischen zwei Kennwerten, die direkt beim Ladegerät oder über ein ihm zugehöriges Hilfsgerät (14 oder 15) ausgewählt werden können.

2. Verfahren nach Anspruch 1, wobei das Steuersignal für das Umschalten eines Aufladekennwertes ein Signal ist, das auf das Schalten einer Leistungsfunktion beim Ladegerät (2) oder bei einem Hilfsgerät (14) zwischen dem Ladegerät und seiner Stromversorgungseinheit einwirkt, um die Versorgung der Batterie an Aufladestrom zu ermöglichen wenn die jeweiligen Spannungen, die bei den Klemmen der wiederaufladbaren Zellen gemessen werden, unter dem maximalen Gleichgewichtsschwellwert (V2) liegen und die Versorgung von Aufladestrom an die Batterie zu unterbrechen, wenn die Spannung, gemessen an den Klemmen einer der wiederaufladbaren Batterie-Zellen, den maximalen Schwellwert übersteigt.

3. Verfahren nach Anspruch 1 wobei das Steuersignal für das Umschalten eines Aufladekennwertes ein Signal ist, das den Austausch von einer Aufladeregulierungsspannung durch eine andere Spannung beim Ladegerät (2) bewirkt, um die Umschaltung von einer höheren (Vr2) auf eine niedrigere (Vr1) der besagten zwei Regulierungs-Spannungen steuert, wenn die Spannung, die bei den Klemmen einer wiederaufladbaren Batterie-Zelle gemessen wird, den maximalen Gleichgewichtsschwellwert (V2) übersteigt, und die Umschaltung von der niedrigen zu der höheren der besagten zwei Regulierungs-Spannungen zu bewirken wenn die jeweiligen Spannungen, die bei den Klemmen der wiederaufladbaren Zellen gemessen werden, unter dem maximalen Gleichgewichtsschwellwert liegen.

4. Anordnung einschließlich einer Batterie, die von in Serien-Schaltung wiederaufladbaren Zellen gebildet wird, und ein Ladegerät (2) das fähig ist, das Aufladen der Batterie mit wenigstens einer dauernden Regulierungs-Spannung zu versorgen, wenn man die Batterie (1) assoziiert mit:
- einer individuellen Schnittstelle (6) für jede wiederaufladbare Zelle (5) der Batterie, einschließlich einer ersten Spannungsmessschaltung (8) die an die Klemmen der wiederaufladbaren Zelle geschaltet ist um eine Stromabzweig-Schaltung (10, 11) zu steuern, die parallel zu ihr montiert ist, zur Abzweigung wenigstens einen Teils des Aufladestroms der ihr geliefert wird, wenn die gemessene Klemmspannung der wiederaufladbaren Zelle einen besonderen minimalen, von der Natur der wiederaufladbaren Zelle abhängenden, Regulierungsschwellwert (V1) übersteigt,
- eine gemeinsame Schnittstelle (7) mit der die individuellen Schnittstellen verbunden sind und an welche jede individuelle Schnittstelle wenigstens eine Angabe der gemessenen Spannung der zugehörigen wiederaufladbaren Zelle liefert, wobei die Angaben benutzt werden, zum Steuern des Aufladens durch das Ladegerät, **dadurch gekennzeichnet daß** die Anordnung umfaßt,:
- individuelle Batterienschnittstellen mit jeweils einer zweiten Spannungsmessschaltung (12) um zu bestimmen wenn die Spannung an den Klemmen der jeweiligen wiederaufladbaren Zelle, der die individuelle Schnittstelle zugeordnet ist, den maximalen Gleichgewichtsschwellwert (V2) übersteigt, auf der Basis einer Spannung, die an den Klemmen eines Messwiderstands (9) in Reihenschaltung mit der Abzweigschaltung besagter Schnittstelle zwischen den Klemmen der jeweiligen wiederaufladbaren Zelle, gemessen wird, und eine Schaltung, die ein UND Übermittlungstor (13) bildet, welches über ein binäres Anzeichen angibt, ob die Spannung, die bei den Klemmen der wiederaufladbaren Zelle gemessen wird, den maximalen Gleichgewichtsschwellwert überstiegen hat oder nicht,
- eine gemeinsame Schnittstelle, die irgendein Anzeichen eines Übersteigens des maximalen Gleichgewichtsschwellwerts übersetzt, welches ihr übermittelt wird durch eine Ubermittlungs-Kette mit einer Serienschaltung von den Übermittlungstoren der individuellen Schnittstellen in der Form eines Steuersignals für das Umschalten eines Aufladekennwertes;
- ein Ladegerät (2) in welchem wenigstens ein Aufladekennwert der Batterie im Ladegerät oder in einem zugehörigen Hilfsgerät (14 oder 15) geändert wird, je nach dem Wert des Steuersignals für das Umschalten eines Aufladekennwertes.

5. Anordnung nach Anspruch 4 worin das Signal, das angibt ob ein Schwellwert überstiegen wurde und das an die gemeinsame Schnittstelle über die Serien-Übermittlungs-Kette geliefert wird, einen binären Wert von 1 hat, wenn die jeweiligen Anzeichen, übermittelt durch die Übermittlungs-Tore der individuellen Schnittstellen, ob die Schwelle überstiegen wurde oder nicht ein Hinweis darauf ist, daß die Spannungen an den Klemmen der Zellen der Batterie, durch Messen in den Schaltungen (8) der individuellen Schnittstellen (6) unter dem maximalen Gleichgewichtsschwellwert (V2), geregelt für die Zellen, dir die gesagt Batterie bilden, liegen

6. Anordnung nach Anspruch 4 oder 5, worin das Modifizieren des Aufladekennwertes in Abhängigkeit des Wertes des Steuersignals für das Umschalten eine Unterbrechung der Lieferung des Ladestroms von dem Ladegerät zu der Batterie zu Folge hat, wenn bei einer individuellen Schnittstelle bestimmt wird, daß die Spannung an den Klemmen einer Batterie-Zelle über dem maximalen Gleichgewichtsschwellwert (V2) für jede Zelle der Batterie liegt, mit Lieferung des Ladestroms wenn bestimmt wird, daß keine Spannung an den Klemmen einer Zelle den Schwellwert übersteigt.

7. Anordnung nach Anspruch 4 oder 5, worin das Modifizieren des Aufladekennwertes in Abhängigkeit des Wertes des Steuersignals für das Umschalten eine Umschaltung des Wertes auf einen anderen Wert der Regulierungs-Spannung, die am Ende eines Aufladens einer Batterie von dem Ladegerät (2) zu der Batterie geliefert wird, zur Folge hat, wobei die Umschaltung von dem höheren Wert (Vr2) auf der niedrigeren Wert (Vr1), stattfindet, wenn bei einer individuellen Schnittstelle bestimmt wird, daß die Spannung an den Klemmen einer Batterie-Zelle über dem maximalen Gleichgewichtsschwellwert (V2) für jede Zelle der Batterie liegt, und eine umgekehrte Umschaltung bewirkt wird, wenn bestimmt wird, daß keine Spannung an den Klemmen von einer der Zellen den Schwellwert übersteigt.

8. Schnittstellen-System für eine Batterie, die von wiederaufladbaren Zellen aufgebaut ist, bestehend aus:
- einer individuellen Schnittstelle (6) für jede wiederaufladbare Zelle (5) der Batterie, wobei jede Schnittstelle eine ersten Spannungsmessschaltung (8) hat, die an die Klemmen der wiederaufladbaren Zelle geschaltet ist um eine Strom-Abzweig-Schaltung (10, 11) zu steuern, die parellel zu dieser Zelle montiert ist, zur Abzweigung wenigstens einen Teils des Aufladestroms der ihr geliefert wird, wenn die gemessene Klemmspannung der wiederaufladbaren Zelle einen besonderen minimalen, von der Natur der wiederaufladbaren Zelle abhängenden, Regulierungsschwellwert (V1) übersteigt,
- eine gemeinsame Schnittstelle (7) mit der die individuellen Schnittstellen verbunden sind und an die jede individuelle Schnittstelle wenigstens eine Angabe der gemessenen Spannung der zugehörigen wiederaufladbaren Zelle liefert, wobei die Angaben benutzt werden, um das Aufladen durch das Ladegerät zu steuern, **dadurch gekennzeichnet daß** das System umfaßt,:
- individuelle Batterienschnittstellen mit jeweils einer zweiten Spannungsmessschaltung (12) um zu bestimmen wenn die Spannung an den Klemmen der jeweiligen wiederaufladbaren Zelle, der die individuelle Schnittstelle zugeordnet ist, den maximalen Gleichgewichtsschwellwert (V2) übersteigt, auf der Basis einer Spannung, die an den Klemmen eines Messwiderstands (9) in Reihenschaltung mit der Abzweigschaltung besagter Schnittstelle zwischen den Klemmen der jeweiligen wiederaufladbaren Zelle, gemessen wird, und eine Schaltung, die ein UND Übermittlungstor (13) bildet, welches über ein binäres Anzeichen angibt, ob die Spannung, die bei den Klemmen der wiederaufladbaren Zelle gemessen wird, den maximalen Gleichgewichtsschwellwert überstiegen hat oder nicht,
- eine gemeinsame Schnittstelle, die irgendein Anzeichen eines Übersteigens des maximalen Gleichgewichtsschwellwerts übersetzt, welches ihr übermittelt wird durch eine Übermittlungs-Kette mit einer Serienschaltung von den Übermittlungstoren der individuellen Schnittstellen in der Form eines Steuersignals für das Umschalten eines Aufladekennwertes, das bei einem Ladegerät entweder direkt oder über ein dem Ladegerät zugehöriges Hilfsgerät benutzt wird.
